# FASCICULE DE BREVET EUROPEEN

(11) **EP 2 219 906 B1**
(45) Date de publication et mention de la délivrance du brevet: **31.08.2011**
(21) Numéro de dépôt: 08872615.3
(22) Date de dépôt: 19.12.2008
(51) Int. Cl.: B60R 21/215

(54) **PLANCHE DE BORD AVEC COUSSIN GONFLABLE**
ARMATURENBRETT MIT EINEM AIRBAG
DASHBOARD WITH AN AIRBAG

(30) Priorité: 21.12.2007 FR 0760246
(43) Date de publication de la demande: 25.08.2010
(73) Titulaire: Faurecia Interieur Industrie, 92000 Nanterre (FR)
(72) Inventeur: SCHUPBACH, Thierry, F-60110 Meru (FR)
(74) Mandataire: Blot, Philippe Robert Emile
(86) Numéro de dépôt international: PCT/FR2008/001804
(87) Numéro de publication internationale: WO 2009/103906

(56) Documents cités:
- EP-A- 0 517 414
- EP-A- 1 348 601
- DE-A-102004 058 826
- US-A- 5 350 191
- US-B2- 7 055 850

## Description

La présente invention concerne une planche de bord d'un véhicule automobile, du type comportant une ligne de moindre résistance délimitant un volet destiné à s'ouvrir sous la pression du déploiement d'un coussin gonflable de sécurité lors d'un choc subi par le véhicule automobile, le volet comportant une paroi ayant une face intérieure du côté du coussin gonflable de sécurité et une face extérieure opposée à la face intérieure (cf. EP 517414 A).

Depuis peu, on cherche à munir les planches de bord de formes variées pour des raisons essentiellement esthétiques. Mais, ces formes ont le désavantage de présenter des reliefs qui interfèrent avec le volet lors de son ouverture sous l'effet de l'actionnement du coussin gonflable de sécurité. Le volet rebondit sur le relief. L'élément de charnière qui couple le volet à la planche de bord est arraché et le volet se désolidarise de la planche de bord. De plus, en impactant le relief, le volet se brise en éclats. Enfin, le relief lui-même est abîmé : non seulement il peut être abîmé de manière irréversible imposant le remplacement de l'intégralité de la planche de bord, mais encore il peut être brisé et projeter des éclats dans l'habitacle au moment du choc.

L'invention a pour but de proposer une planche de bord qui, bien que comprenant de tels reliefs, ne présente pas les problèmes précités et améliore la sécurité du véhicule.

A cet effet, l'invention a pour objet une planche de bord selon la revendication 1.

Suivant des modes particuliers de réalisation, la planche de bord comporte une ou plusieurs des caractéristiques suivantes, prise(s) isolément ou suivant toutes les combinaisons techniquement possibles :
- la paroi du volet est en un matériau rigide, tel qu'une matière plastique rigide,
- ladite amorce est une zone d'épaisseur réduite de la paroi du volet,
- ladite amorce est une rainure située sur ladite face intérieure de la paroi du volet,
- la rainure possède une section transversale en V,
- le volet comporte une peau recouvrant la face extérieure de la paroi et solidaire de celle-ci, et en ce que la peau est apte à retenir les parties de la paroi du volet brisée,
- la peau est en matériau souple, tel qu'une matière plastique souple,
- le volet comporte une plaque de renfort fixée contre la face intérieure de la paroi,
- la plaque de renfort est en un matériau souple, tel qu'un caoutchouc.

L'invention concerne également un véhicule automobile comportant une planche de bord et un boîtier comportant un coussin gonflable de sécurité, caractérisé en ce que la planche de bord est une planche telle que définie ci-dessus.

L'invention et ses avantages seront mieux compris à la lecture de la description qui va suivre, donnée uniquement à titre d'exemple, et faite en se référant aux dessins annexés, sur lesquels :
- la figure 1 est une section transversale d'une planche de bord selon l'invention, le volet étant en position fermée; et

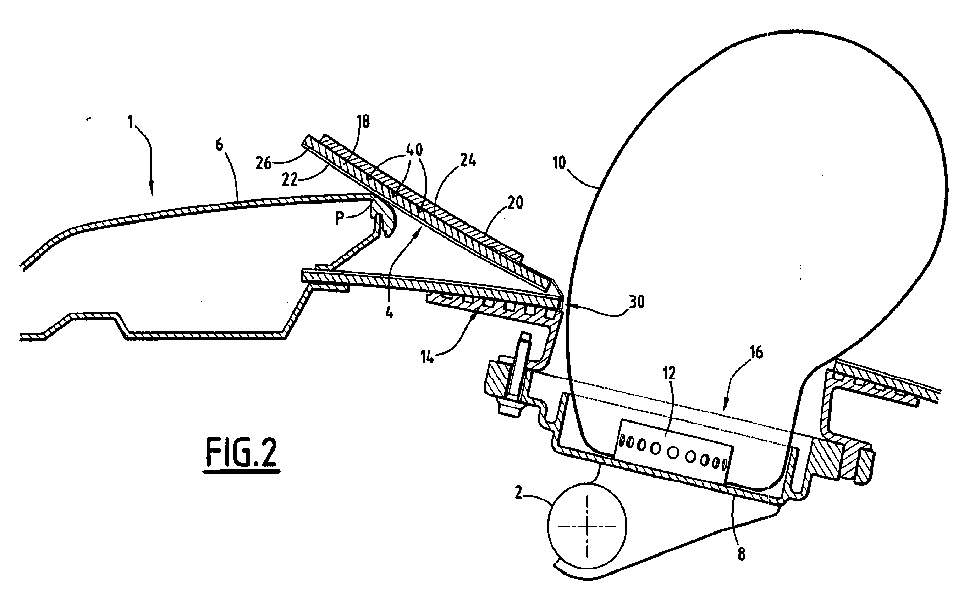

- la figure 2 reprend la section de la figure 1, le volet étant cette fois-ci en position ouverte, arrivant en contact contre un relief de la planche de bord.

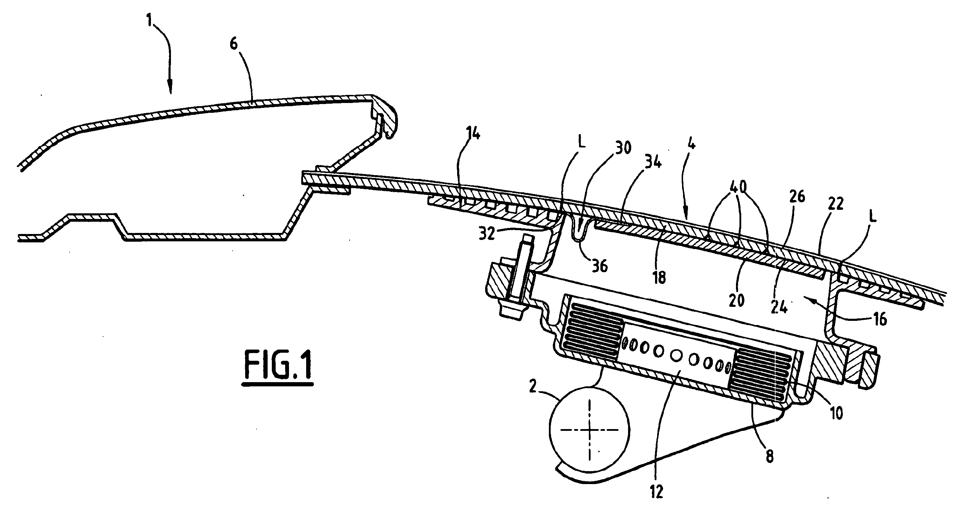

La figure 1 représente une section de la planche de bord selon un plan vertical parallèle à l'axe longitudinal du véhicule. La planche de bord 1 est située au-dessus d'une traverse de planche de bord 2 s'étendant dans la largeur du véhicule automobile.

La planche de bord 1 comporte un volet 4 et une partie formant un relief 6 au voisinage du volet 4.

Sur la traverse 2, sensiblement en face du siège passager, un boîtier 8 est fixé sur la traverse 2. Le boîtier 8 renferme un coussin gonflable de sécurité 10 et des moyens 12 permettant de gonfler le coussin 10 lors de son actionnement au moment d'un choc entre un obstacle extérieur et le véhicule automobile.

Le boîtier 8 est également fixé sur la face inférieure de la planche de bord 1 par l'intermédiaire d'un cadre de support 14. Le cadre de support 14 définit un canal 16 permettant de guider le coussin 10 lors de son gonflement. Ce canal 16 est obturé par le volet 4 de la palanche de bord 1.

Le volet 4 est simplement délimité dans la planche de bord 1 par une ligne pointillée de moindre résistance L. Le volet 4 comporte une paroi 18, une plaque inférieure de renfort 20 et une peau supérieure 22.

La paroi 18 est en un matériau plastique rigide, qui est celui de la planche de bord 1. Sur sa face intérieure 24, orientée du côté du boîtier 8, est fixée la plaque de renfort 20.

Cette plaque de renfort 20 est en un matériau présentant une certaine souplesse, tel qu'un caoutchouc synthétique EPDM (« Ethylene Propylene Diene Monomer » en anglais). La plaque de renfort 20 est soudée à la face intérieure 24, par ultrasons par exemple.

La peau 22 recouvre et est solidaire d'une face extérieure 26 de la paroi 10, opposée à la face intérieure 24. La peau 22, qui s'étend sur les régions de la planche de bord 1 adjacentes au volet 4 et recouvre avantageusement l'essentiel, voire l'intégralité, de la surface de la planche de bord 1, est une feuille d'un matériau plastique souple, par exemple un polyoléfine (TPO).

Le volet 4, de forme essentiellement rectangulaire, est articulé le long d'un de ses bords 28 au reste de la planche de bord 1 au moyen d'une liaison charnière qui est réalisée par un filet 30 en matière plastique.

Le filet 30 présente un bord 32 serré entre la planche bord 1 et le cadre 14, le long du côté de la ligne L adjacent au relief 6, un bord 34 serré entre la face intérieure 24 de la paroi 18 et la plaque de renfort 20, et, entre les bords 32 et 34, une boucle libre 36.

La face intérieure 24 de la paroi 18 est munie de plusieurs amorces de ruptures 40 prenant la forme de rainures à profil en « V ».

Sous la pression exercée par le coussin gonflable de sécurité 10 lors de son actionnement, le volet 4 s'ouvre et tourne autour de la liaison charnière 30 pour libérer le canal 16 du cadre 14 et permettre le gonflement du coussin 10. Lors de son ouverture, le mouvement de rotation du volet 4 se poursuit jusqu'à ce que le volet 4 entre en contact avec le relief 6 de la planche de bord 1. Ce contact se fait au voisinage d'un point P.

Sous l'effet de l'impact localisé du relief 6 sur la face extérieure 26 de la paroi 18, cette dernière se brise en plusieurs parties autour des amorces de rupture 40.

Les différentes parties de la paroi 18 brisée sont maintenues entre elles par la peau 22 et/ou la plaque de renfort 20, qui sont en matériaux souples et déformables.

On notera que le coussin gonflable 10 ouvre le volet 4 par appui sur la plaque de renfort 20. Ainsi, la pression est répartie sur l'ensemble de la face intérieure 24 du volet 4. La paroi 18 ne se brise donc pas au niveau des amorces 40 sous l'action du coussin 10.

On constate que, pour que les amorces de rupture 40 jouent pleinement leur rôle, il faut qu'elles soient situées au voisinage du point de contact P du volet 4 avec le relief 6. L'homme du métier saura disposer ces amorces en fonction de la forme particulière du relief 6 et des propriétés mécaniques des différents composants, en particulier de la paroi rigide 18.

Une partie de l'énergie cinétique du volet 4 acquise lors de son ouverture est dissipée sous forme d'énergie de rupture permettant de briser la paroi 18. Ainsi, l'énergie cinétique résiduelle du volet 4 est réduite. L'impact entre le volet 4 et le relief 6 se fait de manière moins explosive. Par conséquent, le risque que le volet 4 soit arraché du reste de la planche de bord 1 le long de la charnière 30, et qu'un éclat, provenant du volet 4 ou du relief 6, soit projeté dans l'habitacle du véhicule automobile, est fortement réduit.

## Revendications

1. Planche de bord (1) d'un véhicule automobile, du type comportant une ligne de moindre résistance (L) délimitant un volet (4) destiné à s'ouvrir sous la pression du déploiement d'un coussin gonflable de sécurité (10) lors d'un choc subi par le véhicule automobile, le dit volet comportant une paroi (18) ayant une face intérieure (24) du côté d'un boîtier (8) renfermant le coussin gonflable de sécurité et une face extérieure (26) opposée à la face intérieure, planche de bord
**caractérisée en ce qu'**elle comporte un relief (6) avec lequel ledit volet entre en contact lors de son ouverture, de façon à créer un impact localisé sur la face extérieure (26) de la paroi (8), et **en ce que** la paroi du volet comporte au moins une amorce de rupture (40) située au voisinage d'un point de contact (P) entre le volet et le relief, et permettant de briser la paroi en plusieurs parties sous l'effet dudit impact.

2. Planche de bord selon la revendication 1, **caractérisée en ce que** la paroi (18) du volet (4) est en un matériau rigide, tel qu'une matière plastique rigide.

3. Planche de bord selon la revendication 1 ou la revendication 2,
**caractérisée en ce que** ladite amorce (40) est une zone d'épaisseur réduite de la paroi (18) du volet (4).

4. Planche de bord selon l'une quelconque des revendications 1 à 3,
**caractérisé en ce que** ladite amorce est une rainure (40) située sur ladite face intérieure (24) de la paroi (18) du volet (4).

5. Planche de bord selon la revendication 4, **caractérisée en ce que** la rainure (40) possède une section transversale en V.

6. Planche de bord selon l'une quelconque des revendications 1 à 5,
**caractérisée en ce que** le volet (4) comporte une peau (22) recouvrant la face extérieure (26) de la paroi (18) et solidaire de celle-ci, et **en ce que** la peau est apte à retenir les parties de la paroi du volet brisée.

7. Planche de bord selon la revendication 6, **caractérisée en ce que** la peau (22) est en matériau souple, tel qu'une matière plastique souple.

8. Planche de bord selon l'une quelconque des revendications 1 à 7,
**caractérisée en ce que** le volet (4) comporte une plaque de renfort (20) fixée contre la face intérieure (26) de la paroi (18).

9. Planche de bord selon la revendication 8, **caractérisée en ce que** la plaque de renfort (20) est en un matériau souple, tel qu'un caoutchouc.

10. Véhicule automobile comportant une planche de bord et un boîtier (8) renfermant un coussin gonflable de sécurité (10), **caractérisé en ce que** ladite planche de bord (1) est une planche selon l'une quelconque des revendications 1 à 9.

## Claims

1. Dashboard (1) for a motor vehicle, of the type comprising a line (L) of less resistance which delimits a flap (4) which is intended to open under the pressure of the deployment of a safety airbag (10) when the motor vehicle is subjected to an impact, the flap comprising a wall (18) which has an inner face (24) at the side of a casing (8) which comprises the safety airbag and an outer face (26) opposite the inner face, said dashboard being **characterised in that** it comprises a relief (6) with which the flap comes into contact when it opens, in order to create a localised impact on the outer face (26) of the wall (8), and **in that** the wall of the flap comprises at least one break starting point (40) which is located in the region of a contact point (P) between the flap and the relief and which allow the wall to be broken into several pieces during said impact.

2. Dashboard according to claim 1, **characterised in that** the wall (18) of the flap (4) is of a rigid material, such as a rigid plastic.

3. Dashboard according to claim 1 or claim 2, **characterised in that** the break starting point (40) is a zone of reduced thickness of the wall (18) of the flap (4).

4. Dashboard according to any one of claims 1 to 3, **characterised in that** the break starting point is a groove (40) which is located on the inner face (24) of the wall (18) of the flap (4).

5. Dashboard according to claim 4, **characterised in that** the groove (40) has a V-like cross-section.

6. Dashboard according to any one of claims 1 to 5, **characterised in that** the flap (4) comprises a skin (22) which covers the outer face (26) of the wall (18) and which is fixedly joined thereto, and **in that** the skin is capable of retaining the pieces of the wall of the broken flap.

7. Dashboard according to claim 6, **characterised in that** the skin (22) is of flexible material, such as a flexible plastic.

8. Dashboard according to any one of claims 1 to 7, **characterised in that** the flap (4) comprises a reinforcement plate (20) which is fixed against the inner face (26) of the wall (18).

9. Dashboard according to claim 8, **characterised in that** the reinforcement plate (20) is of a flexible material, such as a rubber material.

10. Motor vehicle comprising a dashboard and a casing (8) comprising an airbag (10), **characterised in that** the dashboard (1) is a dashboard according to any one of claims 1 to 9.

## Patentansprüche

1. Armaturenbrett (1) eines Kraftfahrzeugs des Typs umfassend eine Linie mit geringerem Widerstand (L), die eine Klappe (4) begrenzt, dazu vorgesehen, sich unter dem Druck der Entfaltung eines Airbags (10) bei einem Aufprall, dem das Kraftfahrzeug ausgesetzt ist, zu öffnen, wobei die Klappe eine Wand (18) umfasst, die eine innere Seite (24) neben einem Gehäuse (8) aufweist, das den Airbag einschließt, und eine äußere Seite (26) gegenüber der inneren Seite, wobei das Armaturenbrett **dadurch gekennzeichnet ist, dass** es ein Relief (6) umfasst, mit dem die Klappe bei ihrer Öffnung in Kontakt tritt, um einen lokalisierten Aufschlag auf der äußeren Seite (26) der Wand (8) zu erzeugen, und **dadurch**, dass die Wand der Klappe mindestens eine Soll-Bruchstelle (40) umfasst, die sich neben einem Kontaktpunkt (P) zwischen der Klappe und dem Relief befindet und ermöglicht, die Wand bei dem Aufschlag in mehrere Teile zu zerbrechen.

2. Amaturenbrett nach Anspruch 1, **dadurch gekennzeichnet, dass** die Wand (18) der Klappe (4) aus einem starren Material besteht, wie z.B. einem starren Plastikmaterial.

3. Armaturenbrett nach Anspruch 1 oder Anspruch 2, **dadurch gekennzeichnet, dass** die Soll-Bruchselle (40) ein Bereich mit einer reduzierten Dicke der Wand (18) der Klappe (4) ist.

4. Armaturenbrett nach einem der Ansprüche 1 bis 3, **dadurch gekennzeichnet, dass** die Soll-Bruchselle eine Nut (40) ist, die sich auf der inneren Seite (24) der Wand (18) der Klappe (4) befindet.

5. Armaturenbrett nach Anspruch 4, **dadurch** gekenntzeichnet, dass die Nut (40) einen V-förmigen Querschnitt aufweist.

6. Armaturenbrett nach einem der Ansprüche 1 bis 5, **dadurch gekennzeichnet, dass** die Klappe (4) eine Haut (22) umfasst, die die äußere Seite (26) der Wand (18) abdeckt und mit dieser fest verbunden ist, und **dadurch**, dass die Haut dazu geeignet ist, die Teile der Wand der gebrochenen Klappe zurückzuhalten.

7. Armaturenbrett nach Anspruch 6, **dadurch gekennzeichnet, dass** die Haut (22) aus einem weichen Material besteht, wie z.B. einem weichen Plastikmaterial.

8. Armaturenbrett nach einem der Ansprüche 1 bis 7, **dadurch gekennzeichnet, dass** die Klappe (4) eine Verstärkungsplatte (20) umfasst, die gegen die innere Seite (26) der Wand (18) befestigt ist.

9. Armaturenbrett nach Anspruch 8, **dadurch gekennzeichnet, dass** die Verstärkungsplatte (20) aus einem weichen Material besteht, wie z.B. einem Gummi.

10. Kraftfahrzeug, umfassend ein Armaturenbrett und ein Gehäuse (8), das einen Airbag (10) einschließt, **dadurch gekennzeichnet, dass** das Armaturenbrett (1) ein Armaturenbrett nach einem der Ansprüche 1 bis 9 ist.
